# EUROPÄISCHE PATENTSCHRIFT

(11) **EP 1 495 665 B1**
(45) Veröffentlichungstag und Bekanntmachung des Hinweises auf die Patenterteilung: **31.08.2011**
(21) Anmeldenummer: 04103215.2
(22) Anmeldetag: 07.07.2004
(51) Int. Cl.: A01D 57/20

(54) **Erntegutaufnahmevorrichtung mit Fördergurtzusammenbau**
Crop collecting device with a belt conveyor assembly
Dispositif de ramassage de produits de récolte equipé d'un ensemble à bande transporteuse

(30) Priorität: 10.07.2003 DE 10331197
(43) Veröffentlichungstag der Anmeldung: 12.01.2005
(73) Patentinhaber: DEERE & COMPANY, Moline, Illinois 61265-8098 (US)
(72) Erfinder: Zürn, Rolf, 74214, Schöntal (DE); Stahl, Martin, 74238, Krautheim (DE); Kempf, Günter, 74238, Krautheim-Gommersdorf (DE)
(74) Vertreter: Holst, Sönke

(56) Entgegenhaltungen:
- US-A- 1 729 314
- US-A- 1 931 416
- US-A- 4 038 809
- US-A- 5 301 496
- US-E- R E35 543

## Beschreibung

Die Erfindung betrifft eine Erntegutaufnahmevorrichtung, die eingerichtet ist, über ein Feld bewegt zu werden und Emtegut aufzuriehmen, mit:
einem Rahmen,
mehreren seitlich nebeneinander am Rahmen angebrachten Fördergurtzusammenbauten, die im Betrieb das Emtegut nach hinten fördern und jeweils eine erste Walze und eine zweite Walze umfassen, um die ein Fördergurt umläuft,
einer an der Rückseite der Fördergurtzusammenbauten angeordneten Querförderschnecke die das Emtegut zur Mitte der Erntegutaufnahmevorrichtung fördert,
und einem an einer in Vorwärtsrichtung vorderen Seite des Rahmens angeordneten Mähwerksbalken,
wobei die Walzen der Fördergurtzusammenbauten durch Halteelemente aneinander befestigt sind und jeweils die erste Walze zum Antrieb und/oder Abtrieb mit einer Welle verbunden ist, die Welle drehbar am Rahmen abgestützt sind und die Fördergurtzusammenbauten um die Drehachse der jeweiligen bis in eine Außerbetriebsstellung hochschwenkbar am Rahmen gelagert sind.

Erntegutaufnahmevorrichtungen in Form von Schneidwerken mit Fördergurtrusammenbauten sind in der GB 1 501 639 A, US 4 038 809 A, GB 1 574 033 A und der GB 1 602 067 A beschrieben. Diese Schneidwerke weisen einen Rahmen mit einem Boden, Seitenwänden und einer Rückwand auf. Vor der Rückwand ist eine Querförderschnecke angeordnet. Zwischen einem Mähwerksbalken an der Vorderseite des Bodens und der Querförderschnecke befinden sich oberhalb des Bodens mehrere seitlich nebeneinander angeordnete Fördergurte, die das durch den Mähwerksbalken abgeschnittene Emtegut nach hinten zur Querförderschnecke transportieren, welche es dann in ihrem mittleren Bereich an den Schrägförderer eines Mähdreschers abgibt. Oberhalb des Mähwerksbalkens und der Fördergurte befindet sich eine rotierende Haspel, die das stehende Emtegut dem Mähwerksbalken zuführt.

Die endlosen Fördergurte laufen um vordere und hintere Walzen um. Die hintere Walze wird angetrieben und bedingt durch Friktion eine Bewegung der Fördergurte. Zwischen den beiden Walzen liegt das untere Trum der Fördergurte an dritten, durch Federkraft nach unten vorgespannten Walzen an, die eine hinreichende Spannung des Fördergurtes bewirken. Gemäß der GB 1 501 639 A und der GB 1 574 033 A erstrecken sich die vorderen und hinteren Walzen jeweils über die gesamte Breite des Schneidwerks, während sie sich in der GB 1 602 067 A nur über die Breite des zugehörigen Fördergurts erstrecken.

Die Walzen und mit ihnen auch die Fördergurte sind starr am Rahmen des Schneidwerks befestigt. Als nachteilig ist bei den genannten Schneidwerken somit anzusehen, dass ein hoher Aufwand erforderlich ist, um die Fördergurte zur Reinigung, Wartung oder Beseitigung von Verstopfungen zu demontieren.

Die EP 1 055 361 A beschreibt ein anderes Schneidwerk, bei dem seitliche Fördergurte das Emtegut zur Mitte fördern, wo es durch einen dritten Fördergurt nach hinten in den Mähdrescher gefördert wird. Die Fördergurte sind an ihnen zugeordneten Rahmen angebracht, die einzeln demontierbar sind.

Die US 35 543 RE beschreibt ein flexibles Schneidwerk mit drei Fördergurten, von denen zwei das Emtegut zur Mitte transportieren und der dritte es nach hinten in den Schrägförderer eines Mähdreschers verbringt. Das vordere Ende des dritten Fördergurts ist in einem begrenzten Bereich vertikal bewegbar, um die bei einer Bewegung des die ersten zwei Fördergurte tragenden Rahmens gegenüber dem den dritten Fördergurt tragenden Rahmen auftretenden Abstandsänderungen aufnehmen zu können.

In der US 1 931 416 A wird ein Schwader für ein Mähgerät beschrieben, bei dem die Vorderseite eines Kettenförderers höhenverstellbar ist, indem ein Letzteren haltendes Gestell um die Drehachse seiner rückwärtigen Umlenkwalze verschwenkt wird.

Die US 5 301 496 A beschreibt einen Schwader mit einem Fördergurt, der das aufgenommene Erntegut quer zur Fahrtrichtung fördert. Am äußeren Ende des Fördergurts ist eine seitliche Verlängerung mit einem weiteren Fördergurt angebracht, der in eine Transportstellung nach oben verschwenkbar ist.

Schließlich beschreibt die als gattungsbildend angesehene US 4 617 787 A ein Schneidwerk für einen Mähdrescher mit rückwärtig eines Messerbalkens angeordneten Förderbändern, die das Erntegut nach hinten zu einer Querförderschnecke fördern. Die Förderbänder laufen um vordere und hintere Walzen um, die durch seitliche Verbindungselemente aneinander befestigt sind. Die hinteren Walzen werden durch eine Welle angetrieben, die in einem am Rahmen des Schneidwerks befestigten Lagerbock gelagert ist. In diesem Lagerbock sind auch die Verbindungselemente der Walzen schwenkbar gelagert, sodass die Förderbänder nach oben in eine Wartungsposition verschwenkt werden können.

Die der Erfindung zu Grunde liegende Aufgabe wird darin gesehen, die Wartungsfreundlichkeit einer Erntegutaufnahmevorrichtung mit Fördergurt zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erntegutaufnahmevorrichtung weist einen Fördergurtzusammenbau auf, der eine erste und eine zweite Walze umfasst, um die ein Fördergurt umläuft. Die Walzen sind durch Halteelemente untereinander verbunden. Die Fördergurte dienen zum Transport des durch einen Mähwerksbalken vom Boden abgetrennten Erntegut entgegen der Vorwärtsrichtung nach hinten. Es wird vorgeschlagen, den Fördergurtzusammenbau hochschwenkbar am Rahmen der Erntegutaufnahmevorrichtung zu lagern. Die Schwenkachse des Fördergurtzusammenbaus fällt mit der Drehachse einer Welle zusammen, die zum Antrieb des Fördergurts dient, bzw. zur Weiterleitung des Antriebsmoments von einem ersten Fördergurtzusammenbau an einen zweiten Fördergurtzusammenbau. Dadurch erspart man sich vor dem Verschwenken eine Auftrennung der Antriebsverbindung der Welle. Die genannte Verschwenkbarkeit um die Längsachse der Welle wird derart erreicht, dass man die Welle drehbar an einem Halteelement des Fördergurtzusammenbaus lagert. An anderer Stelle wird die Welle außerdem drehbar am Rahmen der Erntegutaufnahmevorrichtung gelagert, beispielsweise an einem Halteblock. Die Welle ist somit fest am Rahmen der Erntegutaufnahmevorrichtung abgestützt und das Halteelement kann mit dem ganzen Fördergurtzusammenbau um die Welle in eine Außerbetriebsstellung verschwenkt werden.

Auf diese Weise erhält man die Möglichkeit, den Fördergurtzusammenbau nach oben in eine Außerbetriebsstellung zu schwenken, um seine Unterseite und den Raum darunter reinigen und den Fördergurtzusammenbau warten zu können.

Eine Fixierung des Fördergurtzusammenbaus in seiner Betriebsstellung erreicht man durch eine Abstützung eines Halteelements, die im Abstand von der Schwenkachse erfolgt. Zum Verschwenken des Fördergurtzusammenbaus reicht es aus, die Abstützung des Halteelements vom Rahmen zu lösen. Wird zusätzlich der oben genannte Halteblock, an dem sich die Welle abstützt, vom Rahmen gelöst, kann (nach Abtrennen der An- und/oder Abtriebsverbindung der Welle) der ganze Fördergurtzusammenbau demontiert werden.

Weiterhin ist es wünschenswert, den Fördergurtzusammenbau möglichst einfach abnehmen zu können, um ihn warten oder den Fördergurt tauschen zu können. Um dabei eine manuelle Demontage der Antriebsverbindung der Welle zu ersparen, bietet es sich an, die Welle mit einer Kupplung zu verbinden, die zwei voneinander trennbare Hälften aufweist. Eine Hälfte der Kupplung ist mit der Welle verbunden und die andere mit dem An- oder Abtrieb.

Die Trennung von den beiden Hälften der Kupplung kann grundsätzlich auf verschiedene Arten erfolgen. Es wäre denkbar, die Hälften derart zu gestalten, dass ihre Verbindung untereinander durch eine Bewegung der Welle in radialer Richtung auftrennbar ist. Eine derartige Kupplung kann eine Klauenkupplung sein, die ineinander greifende Klauen aufweist, deren Abmessungen ein Abziehen einer Hälfte in radialer Richtung erlauben. In einer bevorzugten Ausführungsform ist hingegen eine Hälfte der Kupplung auf der Welle in deren axialer Richtung verschiebbar gelagert. Die verschiebbar auf der Welle gelagerte Hälfte der Kupplung wird somit entlang der Welle verschoben, um die Antriebsverbindung aufzutrennen. Die Hälften der Kupplung können mit axial orientierten, ineinander eingreifenden Klauen versehen sein, die durch Verschieben einer Hälfte außer Eingriff bringbar sind.

Diese Verschiebung kann gegen die Kraft einer Feder, die die Hälften gegeneinander vorspannt, erfolgen. Dabei ist die Hälfte vorzugsweise formschlüssig an der Welle angebracht. Bei einer derartigen Ausführungsform könnte die Kupplung als Reibkupplung ausgeführt werden, die auch als Überlastsicherung dient.

In einer anderen Ausführungsform ist die Hälfte der Kupplung an der Welle arretierbar. Vor dem Trennen der Antriebsverbindung zwischen den Hälften der Kupplung wird die Arretierung gelöst, um anschließend die Hälfte auf der Welle verschieben und schließlich den Fördergurtzusammenbau abnehmen zu können. Die Drehmomentübertragung zwischen Welle und Hälfte der Kupplung findet in dieser Ausführungsform durch die Arretierung und/oder durch Formschluss zwischen Welle und Kupplung statt.

Eine Arretierung der Hälfte der Kupplung an der Welle kann insbesondere mittels eines Stifts erfolgen, der auch als Überlastsicherung dient. Es können auch andere Überlastsicherungen, insbesondere -kupplungen, in den Antriebsstrang des Fördergurtzusammenbaus eingefügt werden.

Vorzugsweise wird die Hälfte der Kupplung auch abnehmbar an der Welle befestigt, damit sie und die zur Lagerung der Welle am Rahmen dienenden Elemente, z. B. ein Halteblock, von der Welle abgenommen werden können. Dadurch wird auch das Abnehmen und Aufsetzen des Fördergurts auf den Fördergurtzusammenbau erleichtert.

Die beschriebenen lösbaren Kupplungen können auch an Erntegutaufnahmevorrichtungen verwendet werden, deren Fördergurtzusammenbau nicht hochschwenkbar ist.

Die Erfindung kann an beliebigen Typen von Erntegutaufnahmevorrichtungen realisiert werden, wie an Schwadern oder Mähgeräten. Vorzugsweise findet sie an Schneidwerken für Mähdrescher Verwendung.

In den Zeichnungen ist ein nachfolgend näher beschriebenes Ausführungsbeispiel der Erfindung dargestellt. Es zeigt:
- Fig. 1: eine schematische Seitenansicht einer Erntemaschine mit einer Erntegutaufnahmevorrichtung mit Fördergurten,
- Fig. 2: eine Draufsicht auf die Erntegutaufnahmevorrichtung,
- Fig. 3: eine Draufsicht auf einen Fördergurtzusammenbau,
- Fig. 4: eine seitliche Ansicht des Fördergurtzusammenbaus in seiner hochgeschwenkten Stellung, und
- Fig. 5: eine Schnittzeichnung entlang der Linie 5-5 in Figur 3.

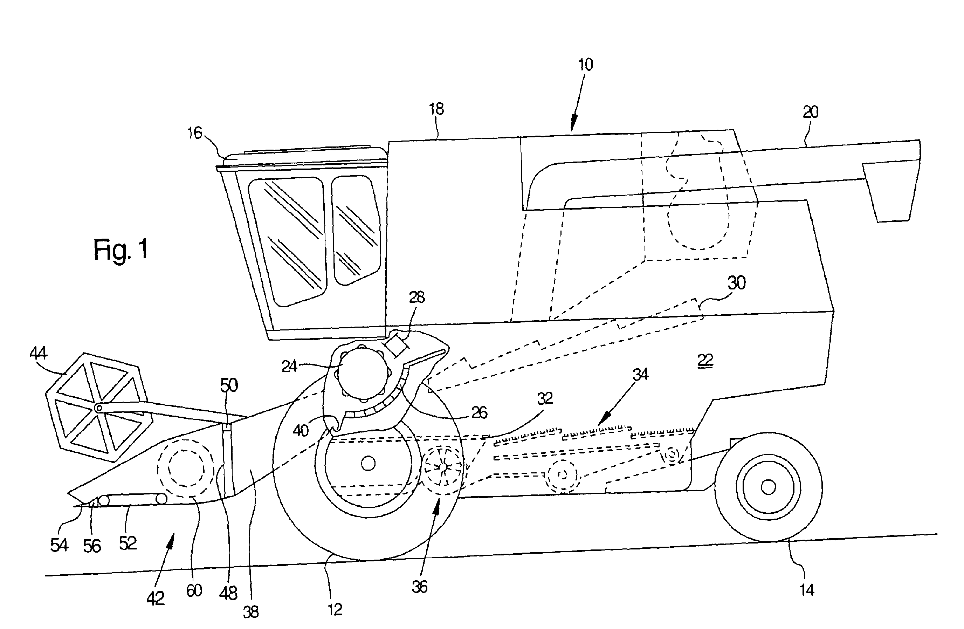

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer Erntegutaufnahmevorrichtung in Form eines Schneidwerks 42 vom Boden aufgenommen worden ist. Den nachfolgenden Ausführungen ist voranzustellen, dass sich Richtungsangaben, wie vor, hinter, oberhalb und unterhalb, im Folgenden auf die Vorwärtsrichtung V der Erntemaschine 10 beziehen.

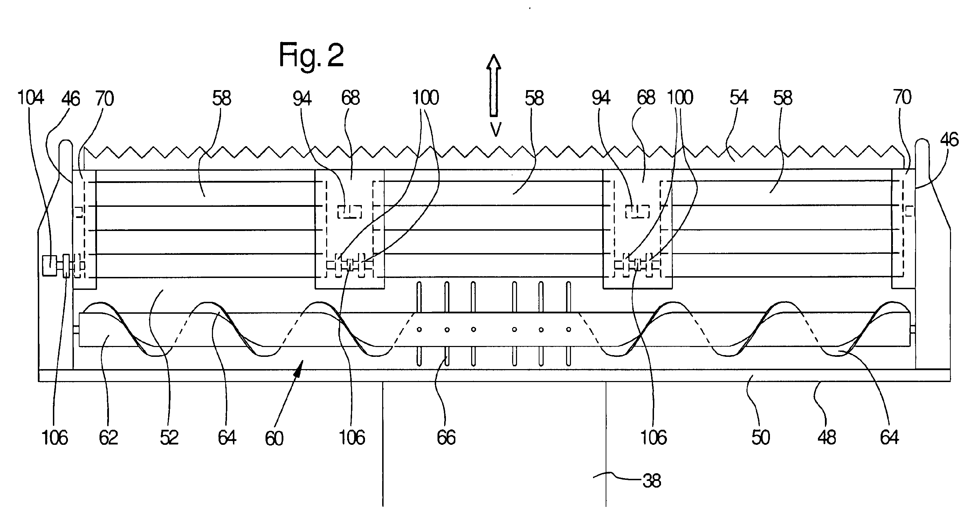

Das Schneidwerk 42 umfasst einen Rahmen, der sich aus Seitenwänden 46, einer Rückwand 48 mit einem an ihrer Oberseite angeordneten Querträger 50 und einem Boden 52 zusammensetzt. Der mittlere Bereich des Querträgers 50 wird durch geeignete Mittel, z. B. Haken, lösbar am Schrägförderer 38 angehängt. An der Vorderseite des Bodens 52 ist ein Mähwerksbalken 54 mit sich hin- und herbewegenden Messern angeordnet. In Vorwärtsrichtung V hinter dem Mähwerksbalken 54 befindet sich eine über die Breite des Schneidwerks 42 erstreckende, nach hinten geringfügig ansteigende Rampe 56, die mit dem Boden 52 starr verbunden ist. Hinter der Rampe 56 folgen drei seitlich nebeneinander angeordnete Fördergurtzusammenbauten 58 mit sich entgegen der Vorwärtsrichtung V nach hinten erstreckender Förderrichtung, hinter denen eine sich quer zur Vorwärtsrichtung V erstreckende Querförderschnecke 60 vorgesehen ist, die sich aus einem Rohr 62 mit daran angeschweißten Förderwendeln 64 und in ihrem mittleren Bereich vorgesehenen gesteuerten Einzugsfingern 66 aufbaut. Die Anzahl der Fördergurtzusammenbauten 58 ist grundsätzlich beliebig, so dass auch mehr oder weniger als die drei dargestellten Fördergurtzusammenbauten Verwendung finden könnten. Oberhalb des Mähwerksbalkens 54 und der Fördergurtzusammenbauten 58 befindet sich eine höhenverstell- und in Vorwärtsrichtung verschiebbar am Rahmen angebrachte, antreibbare Haspel 44, die sich quer zur Vorwärtsrichtung V erstreckt und in der Figur 2 zur Verbesserung der Übersichtlichkeit nicht miteingezeichnet ist.

Oberhalb der Zwischenbereiche zwischen den Fördergurtzusammenbauten 58 sind Abdeckungen 68 angeordnet, die auch die seitlichen Randbereiche der Fördergurtzusammenbauten 58 überdecken. Ähnliche Abdeckungen 70 befinden sich auch zwischen den Seitenwänden 46 und den außen angeordneten Fördergurtzusammenbauten 58. Die Abdeckungen 70 sind lösbar am Boden befestigt, vorzugsweise durch Schraubbolzen. Sie verhindern Ansammlungen von Erntegut und anderen Verunreinigungen im Innenraum der Fördergurtzusammenbauten 58.

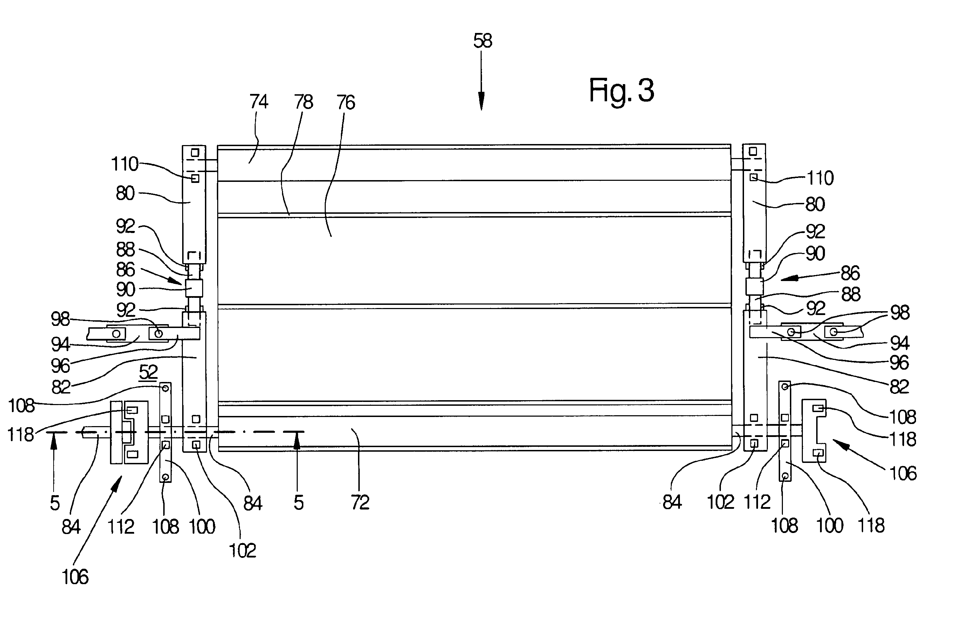

Die Figur 3 zeigt einen einzelnen Fördergurtzusammenbau 58 detaillierter. Er umfasst eine erste, hintere kreiszylindrische Walze 72 und eine zweite, vordere kreiszylindrische Walze 74, um die ein endloser Fördergurt 76 umläuft, der mit nach außen überstehenden Mitnehmern 78 mit rechteckigem Querschnitt ausgestattet ist. In der dargestellten Ausführungsform ist die Oberfläche zwischen den Mitnehmern 78 glatt. Bei anderen Ausführungsformen könnten auch andere Oberflächen, z. B. aufgerauhte oder in sich gewellte, und andere Querschnittsformen und Abstände der Mitnehmer 78 gewählt werden. Der Fördergurt 76 besteht aus in sich flexiblem Material, wie Gummi oder geeignetem Kunststoff.

Der Fördergurtzusammenbau 58 umfasst weiterhin einen Halterahmen, der sich aus jeweils zwei vorderen Halteelementen 80 und zwei hinteren Halteelementen 82 zusammensetzt. Die vordere Walze 74 ist an ihren beiden Enden jeweils in einem vorderen Halteelement 80 drehbar gelagert. Analog ist die hintere Walze 72 an ihren beiden Enden mit je einer Welle 84 (bzw. einer einzigen, durchgehenden Welle 84, auf die die Walze 72 aufgeschoben ist) ausgestattet, die sich durch die beiden hinteren Halteelemente 82 erstreckt und darin drehbar gelagert ist. Die Lagerung der vorderen Walze 74 am vorderen Halteelement 80 erfolgt durch Wälzlager 110 und die der Welle 84 der hinteren Walze 72 am hinteren Halteelement 82 durch Wälzlager 102.

Die vorderen Halteelemente 80 sind jeweils durch eine Verstellmechanik 86 mit den hinteren Halteelementen 82 verbunden, um die Spannung des Fördergurts 76 einstellen zu können und einen geraden Lauf des Fördergurts 76 zu erzielen. Die Verstellmechanik 86 umfasst jeweils eine Gewindestange 88 mit gegenläufigen Gewinden, die sich jeweils in ein Gewindeloch in den Halteelementen 80, 82 erstrecken. Ein an ihr starr angebrachter Sechskant 90 ermöglicht ein Drehen der Gewindestange 88 und somit ein Auseinander- oder Zusammenziehen der Halteelemente 80, 82. Kontermuttern 92 erlauben ein Fixieren der Gewindestange 88 an den Halteelementen 80, 82, so dass eine starre Befestigung der Halteelemente 80, 82 aneinander möglich ist. Die Verstellmechanik 86 erlaubt auch eine Demontage des Fördergurts 76, indem letzterer zunächst durch Verstellen der Gewindestange 88 entspannt wird. Dann kann der Fördergurt 76 seitlich vom Fördergurtzusammenbau 58 abgezogen werden. Es wäre weiterhin denkbar, die recht einfache Verstellmechanik 86 durch einen Mechanismus, der eine Vorspannung der Walzen 72, 74 gegeneinander mittels einer Feder bewirkt, zu ersetzen. Ein geeigneter Mechanismus ist in der EP 1 055 361 A offenbart. Es könnte auch eine dritte, durch Federkraft nach unten vorgespannte Walze vorgesehen sein, um den Fördergurt 76 zu straffen. Durch eine derartige Federvorspannung wird das Abnehmen des Fördergurts 76 vereinfacht, da dann der Fördergurt 76 gegen die Federvorspannung abgenommen werden kann.

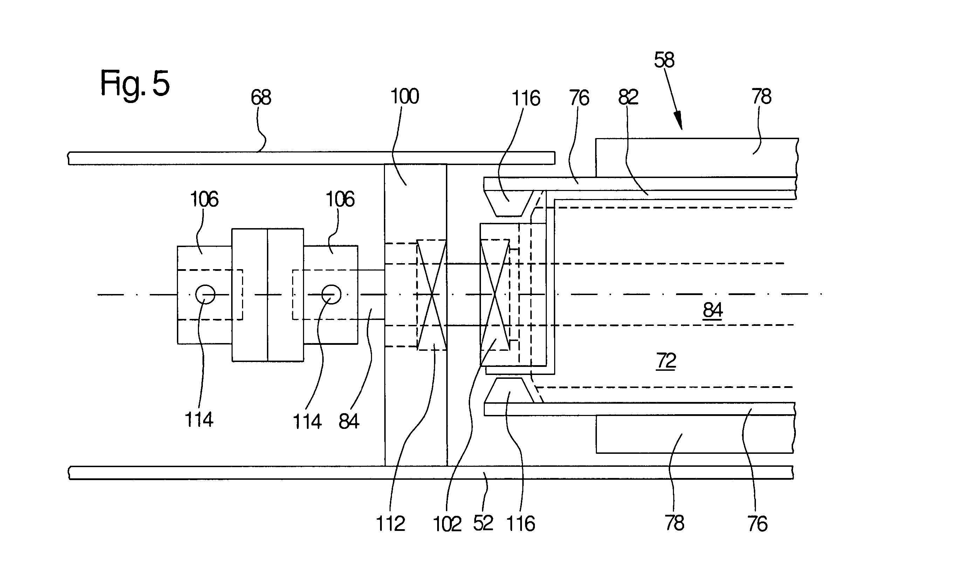

Anzumerken ist, dass die Halteelemente 80, 82 - anders als in Figur 3 dargestellt - vollständig innerhalb der Breite des Fördergurts 76 angeordnet sind, d. h., dass sich der Fördergurt 76 über die Breite der Walzen 72, 74 hinaus erstreckt, wie in der Figur 5 dargestellt ist.

In der Regel sind die beiden vorderen Halteelemente 80 untereinander durch eine Querstrebe verbunden, die in der Figur 3 nicht eingezeichnet ist. Eine andere Querstrebe verbindet vorzugsweise auch die beiden hinteren Halteelemente 80 des Fördergurtzusammenbaus 58.

Die Abstützung der Halteelemente 80, 82 am Boden 52 des Schneidwerks 42 erfolgt an vier Stellen. In Vorwärtsrichtung V betrachtet ist etwa in der Mitte des Fördergurtzusammenbaus 58 ein vorderer Halteblock 94 zwischen zwei benachbarten Fördergurtzusammenbauten 58 bzw. zwischen einer Seitenwand 46 und dem daneben angeordneten Fördergurtzusammenbau 58 am Boden 52 befestigt. Eine an der Oberseite des hinteren Halteelements 82 fixierte Strebe 96 erstreckt sich davon seitlich nach außen und liegt an der Oberseite des vorderen Halteblocks 94 an, wo sie durch eine Schraube 98 lösbar befestigt ist.

Weiterhin sind sich in Vorwärtsrichtung V erstreckende hintere Halteblöcke 100 in der Nähe des hinteren Endes der hinteren Halteelemente 82 am Boden 52 befestigt. Die Wellen 84 der hinteren Walzen 72 erstrecken sich durch die Wälzlager 102, die in entsprechenden Öffnungen in den hinteren Halteelementen 82 angeordnet sind, und sind weiterhin in Wälzlagern 112 gelagert, die sich in zugehörigen Öffnungen in den hinteren Halteblöcken 100 befinden. Die Wellen 84 erstrecken sich über die hinteren Halteblöcke 100 hinaus nach außen. Die Befestigung der hinteren Halteelemente 82 am Boden 52 erfolgt über die Wälzlager 102, die Welle 84, die Wälzlager 112 und schließlich die Halteblöcke 100.

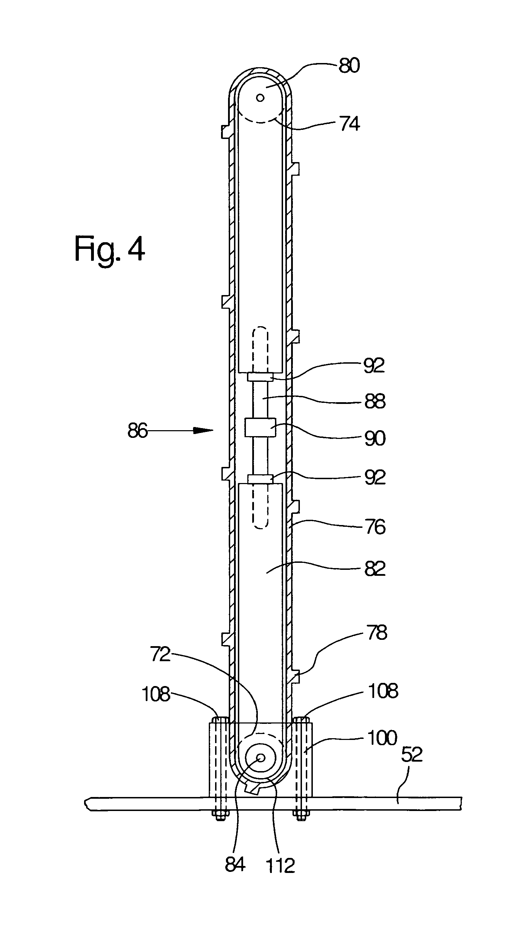

Die hinteren Halteelemente 82 sind auf diese Weise durch die Wälzlager 102 auf der Welle 84 um deren Längsachse drehbar gelagert, was es nach dem Abnehmen der Schrauben 98 von den vorderen Halteblöcken 94 ermöglicht, den Fördergurtzusammenbau 58 insgesamt um die Drehachse der Wellen 84 in die in Figur 4 dargestellte Stellung zu verschwenken. Zuvor sind selbstverständlich die benachbarten Abdeckungen 68, 70 abzunehmen, indem Schrauben entfernt werden, die die Abdeckungen 68, 70 an den Halteblöcken 94, 100 und der Rampe 56 halten. Bei hochgeschwenkten Fördergurtzusammenbauten 58 sind Reinigungs- und Wartungsarbeiten wesentlich erleichtert.

Der Antrieb der Fördergurte 74 erfolgt durch einen Hydromotor 104. Der Hydromotor 104 wird durch einen separaten Hydraulikkreislauf des Schneidwerks 42 angetrieben. Denkbar ist auch ein rein mechanischer Antrieb vom Mähdrescher 10 her oder ein hydraulischer Antrieb durch die Mähdrescherhydraulik oder ein Antrieb, der Hydrauliköl vom Mähdrescher und eine dem Schneidwerk 42 zugeordnete Pumpe verwendet, wie er in der EP 1 055 359 A beschrieben ist. Die Geschwindigkeit des Hydromotors 104 kann fest vorgegeben sein oder durch einen Bediener gesteuert werden. Sie kann auch von der Fahrgeschwindigkeit des Mähdreschers 10 abhängen.

Der Hydromotor 104 treibt die hintere Walze 72 des linken Fördergurtzusammenbaus 58 über eine Klauenkupplung 106 und die linke Welle 84 dieses Fördergurtzusammenbaus 58 an. Die hintere Walze 72 des linken Fördergurtzusammenbaus 58 treibt wiederum über ihre andere Welle 84 und eine weitere Klauenkupplung 106 die linke Welle 72 des mittleren Fördergurtzusammenbaus 58 an, der in derselben Weise wiederum mit dem rechten Fördergurtzusammenbau 58 in Antriebsverbindung steht. Die Klauenkupplungen 106 umfassen je zwei Hälften, die jeweils mit Klauen versehen sind, die zwischen Klauen der anderen Hälfte eingreifen. Zwischen den Klauen der Hälften sind Dämpfungselemente 118 aus in sich elastischem Material angeordnet, um Antriebsmomentspitzen ausgleichen zu können, beispielsweise beim Anlaufen. Die Klauenkupplungen 106 sind derart konfiguriert, dass eine Drehmomentübertragung stattfindet, wenn die mit der Klauenkupplung 106 verbundenen Wellen 84 sich drehen. Die Klauenkupplungen 106 erlauben eine Trennung ihrer zwei Hälften in radialer Richtung. Die Klauen lassen sich somit außer Eingriff bringen, wenn ihre eine Hälfte gegenüber der anderen Hälfte in Längsrichtung der Welle 84 abgezogen wird. Die Klauenkupplungen 106 sind außerdem von den Wellen 84 abnehmbar, damit die Wellen 84 bei der Montage durch die Wälzlager 102, 112 im hinteren Halteelemente 82 und im hinteren Halteblock 100 geschoben werden können. Dazu sind gemäß Figur 5 Hohlspannstifte 114 vorgesehen, die sich durch radiale, miteinander ausgerichtete Bohrungen in der Welle 84 und in der jeweiligen Hälfte der Klauenkupplung 106 erstrecken. Die Hohlspannstifte 114 dienen auch als mechanische Überlastsicherung, da sie bei Überschreiten eines Grenzdrehmoments im Antriebsstrang der Fördergurte 76 abscheren, beispielsweise bei Eindringen eines Fremdkörpers (Stein) zwischen den Fördergurt 76 und dem Boden 52 des Schneidwerks 42. Die Hohlspannstifte 114 können auch durch Federklappbolzen ersetzt werden. Die beispielsweise mittels eines Hammers und eines Durchschlags abnehmbaren Hohlspannstifte 114 ermöglichen es auch, die Hälfte der Klauenkupplung 106 und den Halteblock 100 von der Welle 84 abzunehmen, damit der Fördergurt 78 vom Fördergurtzusammenbau 58 abgenommen werden kann.

Durch die Verwendung der beschriebenen Klauenkupplung 106 wird es möglich, den Fördergurtzusammenbau 58 auszubauen, nachdem die Schrauben 98 und weitere Schrauben 108, die die hinteren Halteblöcke 100 am Boden 52 fixieren, abgenommen wurden. Die einzige dann verbleibende Verbindung mit dem übrigen Schneidwerk 42 wird durch die Klauenkupplungen 106 realisiert, deren Hälften an beiden Seiten des Fördergurtzusammenbaus 58 durch Abnehmen der Hohlspannstifte 114 und Verschieben jeweils der einen Hälfte in Längsrichtung der Welle 84 voneinander trennbar sind. Ein Wiedereinbau erfolgt in umgekehrter Reihenfolge. Dadurch wird es möglich, einzelne Fördergurtzusammenbauten 58 zu Wartungs- oder Reinigungszwecken abzumontieren, ohne dass eine Demontage der anderen Fördergurtzusammenbauten 58 nötig wäre.

Der in Figur 5 gezeigte vertikale Schnitt durch den Halteblock 100 und die benachbarten Teile des Fördergurtzusammenbaus 58 und die Klauenkupplung 106 zeigt, dass sich an der Innenseite des Fördergurts 76 angeordnete Keilführungen 116 seitlich über die hintere Walze 72 hinaus erstrecken. Sie verhindern ein Ablaufen des Fördergurts 76 von den Walzen 72, 74.

## Patentansprüche

1. Erntegutaufnahmevorrichtung, die eingerichtet ist, über ein Feld bewegt zu werden und Erntegut aufzunehmen, mit:
einem Rahmen (46, 48, 50, 52),
mehreren seitlich nebeneinander am Rahmen (46, 48, 50, 52) angebrachten Fördergurtzusammenbauten (58), die im Betrieb das Emtegut nach hinten fördern und jeweils eine erste Walze (72) und eine zweite Walze (74) umfassen, um die ein Fördergurt (76) umläuft,
einer an der Rückseite der Fördergurtzusammenbauten (58) angeordneten Querförderschnecke (60), die das Emtegut zur Mitte der Erntegutaufnahmevorrichtung fördert,
und einem an einer in Vorwärtsrichtung (V) vorderen Seite des Rahmens (46, 48, 50, 52) angeordneten Mähwerksbalken (54),
wobei die Walzen (72, 74) der Fördergurtzusammenbauten (58) durch Halteelemente (80, 82) aneinander befestigt sind und jeweils die erste Walze (74) zum Antrieb und/oder Abtrieb mit einer Welle (84) verbunden ist, die Wellen (84) drehbar am Rahmen (46, 48, 50, 52) abgestützt sind und die Fördergurtzusammenbauten (58) um die Drehachse der jeweiligen Wellen (84) bis in eine Außerbetriebsstellung hochschwenkbar am Rahmen (46, 48, 50, 52) gelagert sind,
**dadurch gekennzeichnet, dass** jede welle (84) am Halteelement (82) drehbar gelagert ist.

2. Erntegutaufnahmevorrichtung nach Anspruch 1, **dadurch gekennzeichnet, dass** die Welle (84) drehbar an einem Halteblock (100) gelagert ist, der lösbar am Rahmen (46, 48, 50, 52) befestigt ist.

3. Erntegutaufnahmevorrichtung nach einem der vorhergehenden Ansprüche, **dadurch gekennzeichnet, dass** wenigstens eines der Halteelemente (80, 82) im Abstand von der Schwenkachse
des Fördergurtzusammenbaus (58) lösbar am Schneidwerk (42) abgestützt ist.

4. Erntegutaufnahmevorrichtung nach einem der vorhergehenden Ansprüche, **dadurch gekennzeichnet, dass** die erste Walze (74) zwecks Antrieb und/oder Abtrieb mit einer Welle (84) verbunden ist, die über eine trennbare Kupplung, insbesondere eine Klauenkupplung (106), mit einem Antrieb oder Abtrieb verbunden ist.

5. Erntegutaufnahmevorrichtung nach Anspruch 4, **dadurch gekennzeichnet, dass** eine Hälfte der Kupplung verschiebbar auf der Welle (84) gelagert ist.

6. Erntegutaufnahmevorrichtung nach Anspruch 4 oder 5, **dadurch gekennzeichnet, dass** die Hälfte der Kupplung an der Welle (84) arretierbar ist.

7. Erntegutaufnahmevorrichtung nach Anspruch 6, **dadurch gekennzeichnet, dass** die Hälfte der Kupplung durch einen Stift, der vorzugsweise auch als Überlastsicherung dient, an der Welle (84) arretierbar ist.

## Claims

1. Crop collecting device which is configured to be moved over a field and to collect crops, having:
a frame (46, 48, 50, 52),
a plurality of conveying belt assemblies (58) which are fitted laterally alongside one another on the frame (46, 48, 50, 52), convey the crops towards the rear during operation and in each case comprise a first roll (72) and a second roll (74), about which a conveying belt (76) revolves,
a transverse conveying screw (60) which is arranged on the rear side of the conveying belt assemblies (58) and conveys the crops to the centre of the crop collecting device,
and a cutter bar (54) arranged on a front side of the frame (46, 48, 50, 52), as seen in the forward direction (V),
wherein the rolls (72, 74) of the conveying belt assemblies (58) are fastened together by retaining elements (80, 82) and in each case the first roll (72) is connected to a shaft (84) for drive input and/or drive output, the shafts (84) are supported in a rotatable manner on the frame (46, 48, 50, 52) and the conveying belt assemblies (58) are mounted on the frame (46, 48, 50, 52) such that they can be pivoted up about the rotational axis of the respective shafts (84) until they reach a non-operating position,
**characterized in that** each shaft (84) is mounted in a rotatable manner on the retaining element (82).

2. Crop collecting device according to Claim 1, **characterized in that** the shaft (84) is mounted in a rotatable manner on a retaining block (100) which is fastened in a releasable manner to the frame (46, 48, 50, 52).

3. Crop collecting device according to either of the preceding claims, **characterized in that** at least one of the retaining elements (80, 82) is supported in a releasable manner on the cutting mechanism (42), at a distance from the pivot axis of the conveying belt assembly (58).

4. Crop collecting device according to one of the preceding claims, **characterized in that** the first roll (72) is connected for the purpose of drive input and/or drive output to a shaft (84) which is connected via a separable coupling, in particular a claw coupling (106), to an input drive or output drive.

5. Crop collecting device according to Claim 4, **characterized in that** half of the coupling is mounted in a displaceable manner on the shaft (84).

6. Crop collecting device according to Claim 4 or 5, **characterized in that** half of the coupling can be locked on the shaft (84).

7. Crop collecting device according to Claim 6, **characterized in that** half of the coupling can be locked on the shaft (84) by a pin, which preferably also serves as an overload prevention means.

## Revendications

1. Dispositif de ramassage de produits de récolte, qui est équipé pour être déplacé sur un champ et ramasser des produits de récolte, avec
- un châssis (46, 48, 50, 52),
- plusieurs ensembles à bande transporteuse (58) installés latéralement l'un à côté de l'autre sur le châssis (46, 48, 50, 52), qui en fonctionnement transportent les produits de récolte vers l'arrière et qui comprennent respectivement un premier rouleau (72) et un deuxième rouleau (74), autour desquels circule une bande transporteuse (76),
- une vis sans fin de transport transversal (60) disposée sur le côté arrière des ensembles à bande transporteuse (58), qui transporte les produits de récolte vers le milieu du dispositif de ramassage de produits de récolte,
- et une barre de coupe (54) disposée sur un côté avant du châssis (46, 48, 50, 52) dans la direction de marche en avant (V),
dans lequel les rouleaux (72, 74) des ensembles à bande transporteuse (58) sont fixés l'un à l'autre au moyen d'éléments de maintien (80, 82) et le premier rouleau respectif (72) est relié à un arbre (84) pour l'entraînement avant et/ou arrière, les arbres (84) sont supportés de façon rotative sur le châssis (46, 48, 50, 52) et les ensembles à bande transporteuse (58) sont supportés sur le châssis (46, 48, 50, 52) d'une façon relevable jusqu'à une position hors service par pivotement autour de l'axe de rotation des arbres respectifs (84),
**caractérisé en ce que** chaque arbre (84) est supporté de façon rotative sur l'élément de maintien (82).

2. Dispositif de ramassage de produits de récolte selon la revendication 1, **caractérisé en ce que** l'arbre (84) est supporté de façon rotative sur un bloc de maintien (100), qui est fixé de façon détachable sur le châssis (46, 48, 50, 52).

3. Dispositif de ramassage de produits de récolte selon l'une quelconque des revendications précédentes, **caractérisé en ce qu'**au moins un des éléments de maintien (80, 82) est appuyé de façon séparable sur le système de coupe (42) à distance de l'arbre de pivotement de l'ensemble à bande transporteuse (58).

4. Dispositif de ramassage de produits de récolte selon l'une quelconque des revendications précédentes, **caractérisé en ce que** le premier rouleau (72) est relié, pour l'entraînement en avant et/ou en arrière, à un arbre (84) qui est relié à un entraînement avant ou arrière au moyen d'un embrayage séparable, en particulier d'un embrayage à griffes (106).

5. Dispositif de ramassage de produits de récolte selon la revendication 4, **caractérisé en ce qu'**une moitié de l'embrayage est montée de façon coulissante sur l'arbre (84).

6. Dispositif de ramassage de produits de récolte selon la revendication 4 ou 5, **caractérisé en ce que** la moitié de l'embrayage peut être bloquée sur l'arbre (84) .

7. Dispositif de ramassage de produits de récolte selon la revendication 6, **caractérisé en ce que** la moitié de l'embrayage peut être bloquée sur l'arbre (84) par une tige, qui sert de préférence de protection contre les surcharges.
